# EUROPEAN PATENT SPECIFICATION

(11) **EP 0 977 673 B1**
(45) Date of publication and mention of the grant of the patent: **13.08.2003**
(21) Application number: 98919695.1
(22) Date of filing: 20.04.1998
(51) Int. Cl.: B60G 11/32, F16F 1/14

(54) **WHEEL SUSPENSION ARRANGEMENT**
VORRICHTUNG FÜR RADAUFHÄNGUNG
SYSTEME DE SUSPENSION

(30) Priority: 23.04.1997 SE 9701515
(43) Date of publication of application: 09.02.2000
(73) Proprietor: Volvo Personvagnar AB, 405 08 Göteborg (SE)
(72) Inventor: ZETTERSTRÖM, Sigvard, S-471 71 Hakenäset (SE)
(74) Representative: Andersson, Per Rune
(86) International application number: PCT/SE98/00706
(87) International publication number: WO 98/047729

(56) References cited:
- WO-A-96/12638
- SE-C- 502 862
- US-A- 4 540 197
- PATENT ABSTRACTS OF JAPAN, Vol. 12, No. 98, (M-680); & JP,A,62 231 808 (MAZDA MOTOR CORP) 12 October 1987.

## Description

### TECHNICAL FIELD:

The present invention relates to an arrangement for a wheel suspension for a vehicle, according to the preamble of the attached claim 1. Such a wheel suspension arrangement is known from WO-A-96/12897.

### BACKGROUND OF THE INVENTION:

In connection with vehicles, for example passenger cars, are different types of suspension systems for the vehicles axles utilized today. In a known way, such wheel suspensions are arranged to provide a attachment for and springing of the vehicle wheel, which in turn provides a good comfort for the passengers and enhances the road handling and service life of the vehicle.

Several different types of wheel suspensions are previously known and constitute parts of systems having, for example, straight or live wheel axles which may be supplemented by spring means, shock absorbers and other component as required. Force-absorbing link arms are also frequently utilized to connect the wheels of the vehicle with its body, and stabilizers which are utilized to dampen too large swaying movements of the vehicle. To optimize the roadhandling of a vehicle, for example the character of the vehicle shock absorber or the distribution of stiffness of the stabilizer may be tuned. In this respect, there is a need to be able to easily change the stiffness of the stabilizer.

A previously known wheel suspension for vehicles is shown in the published patent document WO 96/12897. This wheel suspension comprises a substantially U-shaped spring means which is made of a tube of composite material. The respective ends of the spring element are attached to a link arm, which in turn is attached between a spindle belonging to the vehicle and a body part in the shape of a load-bearing frame element. The wheel suspension is further arranged so that the frame element carries said spring means.

### SUMMARY OF THE INVENTION:

The object of the present invention is to provide an improved arrangement in connection with a wheel suspension for a vehicle, where the wheel suspension more particularly comprises a stabilizer which can be mounted in an easy and space-saving way in the vehicle. This object is accomplished by an arrangement the characteristics of which are shown in the attached claim 1.

The invention is intended to be utilized as a wheel suspension arrangement for a vehicle, comprising a substantially tubular and U-shaped spring means carried by a frame element, a link arm arranged at each respective end of the spring means, each of said link arms being connected between said frame element and a wheel spindle which carries a wheel. The invention is characterised in that said wheel suspension arrangement comprises a separate stabilizer element rotatably rigidly fastened at each respective end to a respective link arm and arranged so as to extend inside said spring means.

By shaping the stabilizer as a component extending inside the spring means, several advantages are reached. On the one hand, a very straightforward installation of the stabilizer is accomplished, which thus simply is inserted through said spring means during installation. Furthermore, no special links, fastening components or attachment components are required for such an installation. Moreover, the arrangement is very packaging friendly and does in principle not consume any extra space since the stabilizer runs inside the spring means. A further advantage is that the invention allows a protected installation of the stabilizer in the vehicle.

Further advantageous embodiments of the invention are shown in the attached independent claims.

### BRIEF DESCRIPTION OF THE DRAWINGS:

The invention will now be described in greater detail by way of example only and with reference to a particular embodiment and the annexed drawings, in which:
- Fig. 1: is a perspective view which schematically shows a wheel suspension for a vehicle provided with the present invention,
- Fig. 2: is a somewhat enlarged perspective view which shows a disassembled attachment device according to the invention, and
- Fig. 3: is a sectional view, from above, through the attachment device according to the invention.

### DETAILED DESCRIPTION OF THE PREFERRED EMBODIMENTS:

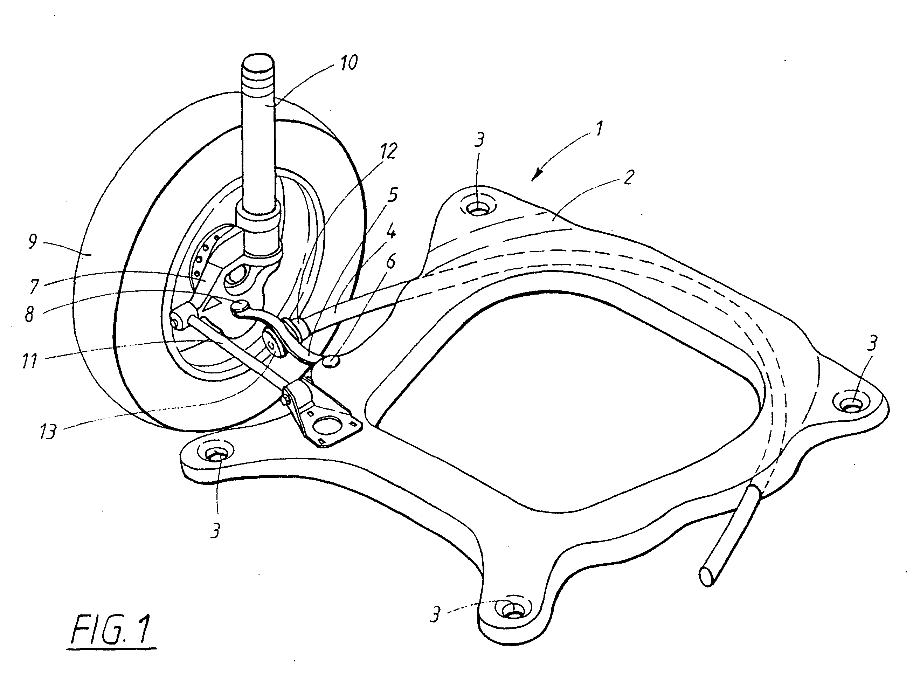

In Fig. 1 the principle arrangement of the present invention is shown. According to a preferred embodiment this is arranged in connection with a wheel suspension 1 of a vehicle (not shown). The wheel suspension 1 comprises a frame element, or "subframe"; 2 which is intended to be arranged at the vehicle body through four mounting points 3 in the shape of through holes.

The frame element 2 carries a substantially cylindrical and U-shaped spring means 4 which respective end parts are intended to be fastened in a link arm 5. According to the embodiment, the spring means 4 is made of a composite material, which gives it a low weight and high strength. Further, the spring means 4 is suitably made of wound or woven fibreglass or carbon fibre in a resin matrix, e.g. epoxy or polyamide. The spring means 4 suitably has a diameter in the order of magnitude of 40 mm and a wall thickness in the order of magnitude of 4-6 mm. Furthermore, the link arm 5 is attached to the frame element 2 via a first mounting point 6, and to a wheel spindle 7 via a second mounting point 8.

The wheel spindle 7 carries a vehicle wheel 9, in a per se already known way, and also constitutes a mount for a suspension arm 10, which in turn comprises a shock absorber. For simplicity, only one link arm 5, one wheel spindle 7 etc. is shown in Fig. 1. It is obvious, though, that both end parts of the spring means 4 are arranged in similar ways.

Further, the frame element 2 is connected to the wheel spindle 7 via a rod 11. When the arrangement according to the figure is utilized for a rear wheel suspension, this rod comprises a tracking rod and when the arrangement is utilized for a front wheel suspension, this rod comprises a tie rod.

The end part of the spring means 4 is connected to the link arm 5 using the mounting device according to the invention. According to what will be described in detail below, the respective end parts of the spring means 4 is, for this reason, provided with a connecting means 12 for fastening the spring means 4 to the link arm 5. The connecting means 12 cooperates with a locking means 13 using through screws (not shown in Fig. 1) which run through the locking means 13, the link arm 5 and the connecting means 12. In this way, the spring means 4 can be fixedly locked in respective link arm 5.

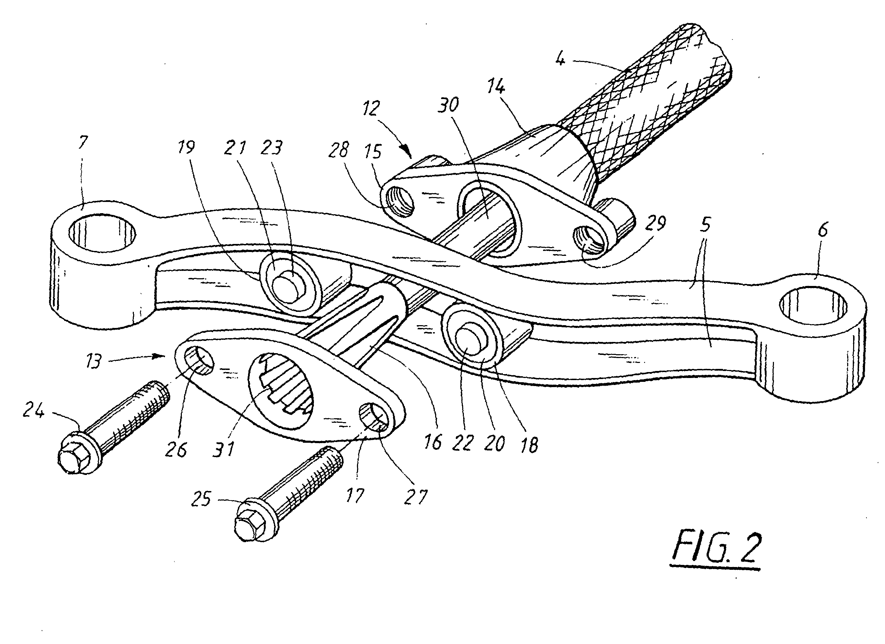

Fig. 2 is an enlarged perspective view which shows the invention in a disassembled state. It is evident from the figure, that the end part of the spring means 4 is connected to the connection means 12, which in turn comprises a rearward tubular part 14 and a forward flat or flangelike element 15. The tubular part 14 is shaped with an inner shape which substantially corresponds to the outer shape of the spring means 4.

Preferably, the tubular part 14 has a conical inner shape, i.e. having a diameter which increases in the direction of the end of the spring means 4. Moreover, the tubular part 14 has a non-circular cross section, for example a hexagonal cross section, which provides a twistlock for the spring means 4 inside the tubular part 14. Further, the connecting means 12 is cast together with the end part of the spring means 4. In this way is provided, on the one hand, a holding force with the help of the casting together and, on the other hand, a mechanical twist lock of the spring means 4 inside the connecting means 12. This provides an effective clamping of the spring means 4. The casting together may suitably be done by casting the connecting means 12 directly on the end of the spring means 4, at which the inside of the connecting means 12 directly will provide the shape of the outside of the spring means 4.

The above described locking means 13 has a pin-shaped means 16 which is facing the spring means 4. The locking means 13 also comprises a further flange-like element 17, which is of substantially the same shape as the flange element 15 which belongs to the connecting means 12. The pin means 16 tapers in the direction of the spring means 4 and has an outer shape which substantially corresponds to the inner shape of the end part of the spring means 4. Furthermore, the pin means 16 is preferably tube shaped.

The link arm 5 is shaped as two substantially plate-like elements extending between the above described mounting points 6, 7. The link arm 5 is further provided with two tube-like lead-throughs 18, 19 in which bushings 20, 21 are arranged. The bushings 20, 21 are preferably made of rubber or another resilient material and comprise, in turn, inner sleeves 22, 23 which are intended for insertion of screws 24, 25 or similar fastening means.

The flange element 17 comprises through holes 26, 27. The distance between the respective centres of the holes 26, 27 is equal to the distance between the corresponding holes 28, 29 in the connecting means 12 and the distance between the respective centres of the inner sleeves 22, 23 of the bushings 20, 21. In this way, both screws 24, 25 may be inserted through the flange element 17 and the link arm 5 and thereafter be fastened in the holes 28, 29 of the connecting means 12, which for this purpose are threaded. When the locking means 13 is locked against the connecting means 12, the pin means 16 is simultaneously inserted into the space which has been formed inside the end of the spring means 4.

According to the invention, the spring element 4 supports a stabilizer 30, which is a per se known component which is utilized to dampen too large swaying movements of the vehicle. According to the embodiment, the stabilizer 30 is arranged as a substantially cylindrical component running inside the spring means 4 and, thus, having an outer diameter which is somewhat smaller than the inner diameter of the spring means 4. The stabilizer 30 preferably comprises a flexible and torsionally rigid steel shaft. The shaft may be made from other material than steel, though, for example carbon fibre material. The stabilizer 30 may thus be made from woven glass, carbon or steel fibres which are shaped to the desired dimensions. The respective end part of the stabilizer 30 protrudes a distance out from the spring means 4 and is intended to be inserted into the pin means 16. Further, the stabilizer 30 is locked against rotary movement by its respective end parts having external splines (not shown in the figure) which cooperate with internal splines 31 in a hole in the flange 17 of the locking means 13. Through the arrangement with the stabilizer 30 running inside the spring means 4, space is saved in the vehicle.

The stabilizer 30 is preferably arranged to run free in the axial direction of the pin means 16. The stabilizer 30 is however prevented from disengagement from said splines 31, which is accomplished, for example, by providing the locking means 13 with a suitable (not shown) lid, or by arranging the flange element 17 having a closed end part. Alternatively, the respective end part of the stabilizer 30 may be provided with a stop means which prevents it from being removed from respective pin means 16.

Further and preferably, a (not shown) rattle protection is arranged between the stabilizer 30 and the inside of the spring means 4. Such a rattle protection may be made of plastic, rubber, felt or the like, and be arranged to prevent an annoying noise from appearing when the stabilizer 30 strikes against the spring element 4.

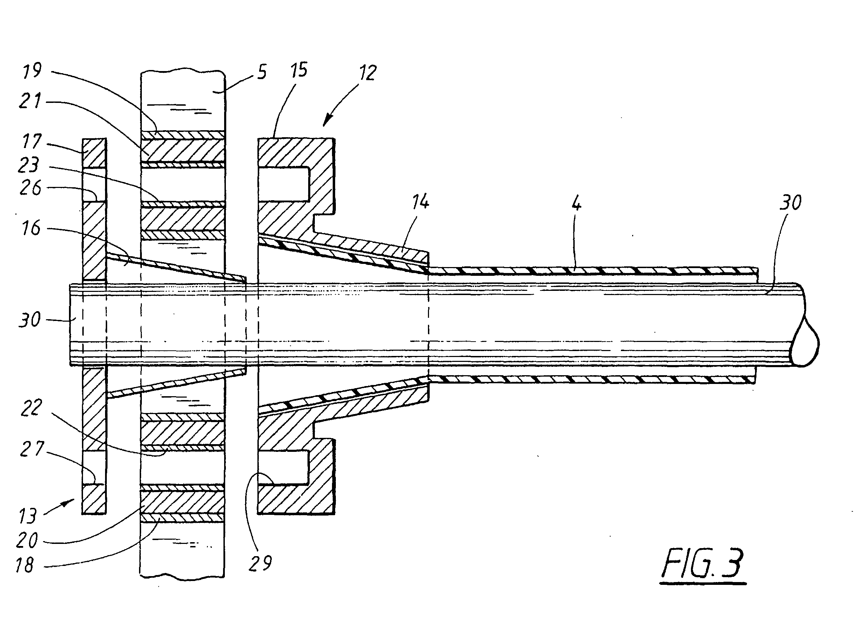

In Fig. 3 a sectional view, from above, through the attachment device according to the embodiment is shown. From the Fig. is apparent, that the spring means 4 is shaped so that its diameter increases gradually along the connecting means 12 extension towards the cross arm 5. The spring means 4 thus follows the inner conical form of the connecting means 12, which makes it impossible for the spring means 4 to be pulled from the connecting means 12 without being deformed or crushed. The end of the spring means 4, which thus is arranged adjacent the link arm 5, preferably has a 10-30% larger diameter than at the opposite end of the connecting means 12. The end of the spring means 4 is, however, shaped having a substantially uniform wall thickness as at the opposite end of the connecting means 12 (or having a somewhat decreasing material thickness in the direction towards the link arm 5). An advantage with this arrangement is that the torsional rigidity of the spring means 4 increases closer to its end, which in turn reduces the distortion of the composite material inside the connecting means 12.

During the assembly of the complete arrangement, the stabilizer 30 is firstly pressed through the spring element 4 and its cast together connecting means 12, at which the end part of the stabilizer 30 will be guided in place through the pin means 16 so that it is locked in said splines 31 (see Fig. 2). After that, the flange 17 of the locking means 13 is aligned according to the location of the bushings 20, 21. In this respect it can be noted, that the bushings are preferably located symmetrically on both sides of the axis which is defined by the longitudinal extension of the spring means 4. Furthermore, the flange 15 of the connecting means 12 is aligned. Lastly, the flanges 15, 17 are locked together by tightening the screws 24, 25. During the tightening, the pin 16 is pressed into the conically shaped end of the spring means 4. In this respect it can be noted, that the pin 16 is shaped so that it pinches against the inside of the end part of the spring means 4, i.e. so that the end part is pinched against the inside of the tubular part 14. The pin 16 and the spring means 4 are shaped so that this pinching force is greatest closest to the end of the spring means 4 which faces the link arm 5 and so that it decreases in towards the spring means 4. In this way, the strain on the most critical cross-section may be lowered, i.e. where the spring means 4 protrudes out of the connecting means 12 (i.e. at the right edge of the connecting means 12 according to Fig. 3).

To eliminate the demand for a good fit between the pin means 16 and the inside of the spring means 4, the outside of the pin means 16 may be covered with a relatively thick rubber layer (not shown). Further, it is applicable to shape the pin means 15 as a resilient means made of plastic or rubber. Such a resilient embodiment would in that case lower the cost (owing to reduced manufacturing tolerances) and also facilitate a possible disassembly.

Through the arrangement according to the invention, the resilient rubber bushings 20, 21 transmit the torque from the spring means 4 to the link arm 5 (i.e. during a vertical springing of the wheel 9) at the same time as they permit the necessary deformation in axial direction (for the longitudinal springing of the wheel 9) without producing high bending stresses at the connection of the spring 4 to the link arm attachment 3. Further, the connection means 12, the pin 16 and the inner sleeves 22, 23 of the bushings form a fixed connection with the spring means 4, at the same time as the link arm 5 is provided with a resilient connection with the spring means 4 via the rubber bushings 19, 20.

Because the spring means 4 is connected to the link arm 5, the bending moment, the torque, the tensile and compression forces will be transmitted between the components without the components being subjected to too high concentrations of tension.

The invention is not limited to the above description and to the embodiments shown on the drawings, but may be varied within the scope of the appended claims. For example, a tough glue may be applied between the inside of the end part of the spring means 4 and the pin 16 to provide an improved connection between these components.

Different materials may be utilized for to manufacture the different constituents. For example, the link arm 5, the connecting means 12 and the locking means 13 may be made of, for example, steel, aluminium, magnesium or reinforced plastic. The stabilizer 30 is suitably made of a bendable but torsionally rigid steel shaft (which then may be wound like a wire), or alternatively from glass or carbon fibres and epoxy.

Further, the pin means 16 may, in principle, be omitted if the locking means 13 is dimensioned to withstand the forces present.

The force transmission between the connected elements may, in principle, be rigid and, for this reason, the above described bushings 20, 21 may be omitted. Furthermore, instead of the screws 24, 25, other fastening means may be utilized, for example rivets.

Finally, the spring means 4 may be shaped having a circular or non-circular cross-section. For example, it may be shaped having an oval or hexagonal cross-section. Although, the section is preferably closed.

## Claims

1. A wheel suspension arrangement for a vehicle, comprising a substantially tubular and U-shaped spring means (4) carried by a frame element (2), a link arm (5) arranged at each respective end of the spring means (4), each of said link arms (5) being connected between said frame element (2) and a wheel spindle (7) which carries a wheel, **characterised in that** said wheel suspension arrangement comprises a separate stabilizer element (30) rotatably rigidly fastened at each respective end to a respective link arm (5) and arranged so as to extend inside said spring means (4).

2. Arrangement according to claim 1,
**characterised in, that** said stabilizer (30) comprises a substantially tubular, flexible and torsionally rigid element.

3. Arrangement according to claim 1 or 2,
**characterised in, that** respective end part of said stabilizer (30) is provided with splines which cooperate with further splines (31) in a locking means (13) which is connected to said link arm (5).

4. Arrangement according to any preceding claim,
**characterised in, that** said stabilizer (30) is made of woven glass, carbon or steel fibres.

5. Arrangement according to any preceding claim,
**characterised in, that** it comprises a noise dampening element is arranged between the outside of said stabilizer (30) and the inside of said spring means (4).

6. Vehicle equipped with an arrangement according to any of the claims 1-5.

## Patentansprüche

1. Anordnung zur Radaufhängung für ein Fahrzeug, mit einer im wesentlichen rohrartigen und U-förmigen Federeinrichtung (4), die von einem Rahmenelement (2) gehalten ist, einem Gelenkarm (5), der an jeder Entsprechenden der Federeinrichtung (4) angeordnet ist, wobei jeder der Gelenkarme (5) zwischen dem Rahmenelement (2) und einem Radzapfen (7) verbunden ist, der ein Rad trägt, **dadurch gekennzeichnet, daß** die Radaufhängungsanordnung ein separates Stabilisatorelement (30) aufweist, das drehbar starr an jedem entsprechenden Ende an einem entsprechenden Gelenkarm (5) befestigt und derart angeordnet ist, daß es sich in das Innere der Federeinrichtung (4) erstreckt.

2. Anordnung nach Anspruch 1, **dadurch gekennzeichnet, daß** der Stabilisator ein im wesentlichen rohrartiges flexibles und drehsteifes Element aufweist.

3. Anordnung nach Anspruch 1 oder 2, **dadurch gekennzeichnet, daß** ein entsprechender Endabschnitt des Stabilisators (30) mit Keilnuten versehen ist, die mit weiteren Keilnuten (31) in einer Arretiereinrichtung (13) zusammenwirken, die mit dem Gelenkarm (5) verbunden ist.

4. Anordnung nach einem der vorangehenden Ansprüche, **dadurch gekennzeichnet, daß** der Stabilisator (30) aus Glasgewebe, Kohlenstoff- oder Stahlfasern hergestellt ist.

5. Anordnung nach einem der vorangehenden Ansprüche, **dadurch gekennzeichnet, daß** sie ein Geräuschdämpfungselement aufweist, das zwischen der Außenseite des Stabilisators (30) und der Innenseite der Federeinrichtung (4) angeordnet ist.

6. Fahrzeug mit einer Anordnung nach einem der Ansprüche 1 bis 5.

## Revendications

1. Système de suspension de roues pour un véhicule, comprenant des moyens à ressort (4) sensiblement tubulaires et en forme de U, portés par un élément de châssis (2), un bras de liaison (5) agencé à chaque extrémité respective des moyens à ressort (4), chacun desdits bras de liaison (5) étant connecté entre ledit élément de châssis (2) et une fusée de roue (7) qui porte une roue, **caractérisé en ce que** ledit système de suspension de roues comprend un élément stabilisateur séparé (30) fixé rigidement vis-à-vis de la rotation à chaque extrémité respective à un bras de liaison respectif (5) et agencé de manière à s'étendre à l'intérieur desdits moyens à ressort (4).

2. Système selon la revendication 1, **caractérisé en ce que** ledit stabilisateur (30) comprend un élément sensiblement tubulaire, souple et rigide en torsion.

3. Système selon l'une ou l'autre des revendications 1 et 2, **caractérisé en ce que** la partie terminale respective dudit stabilisateur (30) est pourvue de cannelures qui coopèrent avec d'autres cannelures (31) dans un organe de blocage (13) qui est connecté audit bras de liaison (5).

4. Système selon l'une quelconque des revendications précédentes, **caractérisé en ce que** ledit stabilisateur (30) est réalisé en fibres de verre, de carbone ou d'acier tissées.

5. Système selon l'une quelconque des revendications précédentes, **caractérisé en ce qu'**il comprend un élément d'amortissement de bruit agencé entre l'extérieur dudit stabilisateur (30) et l'intérieur desdits moyens à ressort (4).

6. Véhicule équipé d'un système selon l'une quelconque des revendications 1 à 5.
